# EUROPÄISCHE PATENTSCHRIFT

(11) **EP 2 637 531 B1**
(45) Veröffentlichungstag und Bekanntmachung des Hinweises auf die Patenterteilung: **07.01.2015**
(21) Anmeldenummer: 11781502.7
(22) Anmeldetag: 04.11.2011
(51) Int. Cl.: A47J 27/08

(54) **DRUCKERFASSUNGSSYSTEM FÜR EINEN SCHNELLKOCHTOPF**
PRESSURE DETECTION SYSTEM FOR A PRESSURE COOKER
SYSTÈME DE DÉTECTION DE PRESSION POUR UN AUTOCUISEUR

(30) Priorität: 26.02.2011 DE 202011003293 U; 11.11.2010 DE 102010051060
(43) Veröffentlichungstag der Anmeldung: 18.09.2013
(73) Patentinhaber: Fissler GmbH, 55743 Idar-Oberstein (DE)
(72) Erfinder: FISSLER, Folkhart, 55743 Idar-Oberstein (DE)
(74) Vertreter: Patentanwälte Bauer Vorberg Kayser
(86) Internationale Anmeldenummer: PCT/EP2011/069415
(87) Internationale Veröffentlichungsnummer: WO 2012/062657

(56) Entgegenhaltungen:
- EP-A1- 2 002 765
- EP-A2- 1 884 179
- WO-A1-2010/105208
- DE-A1- 4 404 152
- DE-U1- 9 206 061

## Beschreibung

Die Erfindung erfasst ein Druckerfassungssystem für einen Schnellkochtopf mit einem Sensor zum Erfassen eines in dem Inneren des Schnellkochtopfes herrschenden Drucks mittels Messwerten, einer mit dem Sensor verbundenen Recheneinheit und einer Anzeige, wobei die Recheneinheit dazu eingerichtet ist, die von dem Sensor gelieferten Messwerte auszuwerten und das Erreichen, bspw. das Über- oder Unterschreiten, mindestens eines ersten Schwellenwertes festzustellen. Dabei muss das Erfassen des Druckes erfindungsgemäß nicht in üblichen Einheiten einer Druckmessung erfolgen. Mit dem Erfassen eines in den Inneren des Schnellkochtopfes herrschenden Drucks ist in der vorliegenden Anmeldung gemeint, dass Sensormesswerte in beliebigen Einheiten erfasst werden, die in einer definierten Weise von dem Druck im Inneren des Schnellkochtopfes abhängen und daher ein Maß für den in dem Schnellkochtopf herrschenden Druck sind, ohne dass der Druck genau angegeben werden können muss.

Bei Schnellkochtöpfen, in der Fachsprache auch Dampfdruckkochtöpfe genannt, wird das zu garende Gut zusammen mit einer Flüssigkeit in dem Schnellkochtopf dampfdicht eingeschlossen und der Schnellkochtopf auf einer Kochstelle erwärmt. Bei der Erwärmung verdampft in dem Schnellkochtopf befindliche Flüssigkeit, meist Wasser. Dies hat eine Druckerhöhung in dem Schnellkochtopf zur Folge. Die Garzeit in dem Schnellkochtopf wird im Wesentlichen durch die Zeit bestimmt, in welcher der Dampfdruck in dem Schnellkochtopf innerhalb eines bestimmten Arbeitsbereiches liegt, d.h. oberhalb eines Schwellenwertes "Garzeitanfang" und unterhalb eines Schwellenwertes " zu hoher Druck".

In diesem Zusammenhang sind bereits Druckerfassungssysteme der eingangs genannten Art bekannt, die den Innendruck in einem Schnellkochtopf erfassen und bei Erreichen des Schwellenwertes "Garzeitanfang" eine Zeitschaltuhr bzw. einen Timer einschalten.

So offenbart bspw. die DE 92 06 061 U1 einen Dampfdruckkochtopf mit einem mit einer Druckanzeige versehenen Deckel, wobei auf den Deckel im Bereich der Druckanzeige ein Kurzzeitmesser aufgesetzt ist, der mit einer Einrichtung zum Feststellen einer Kochzeit, einer auf die Position der Druckanzeige ansprechenden Einrichtung zum Hemmen des Ablaufs der eingestellten Kochzeit und einen bei Ablauf der eingestellten Kochzeit ansprechenden Signalgeber versehen ist. Dazu weist die Druckanzeige einen Dauermagneten auf, so dass die Position der Druckanzeige durch eine das Magnetfeld elektromagnetisch abfragende Einrichtung ermittelt werden kann. Der Kurzzeitgeber wird nach Erreichen oder Überschreiten der vorgegebenen Druckstufe (entsprechend einer Position der Druckanzeige) gestartet, wobei bei einem zwischenzeitlichen Unterschreiten des vorgegebenen Drucks das weitere Ablaufen der eingestellten Kochzeit unterbrochen werden kann.

Ein ähnliches Messprinzip wird in der EP 0 587 532 B1 bei einem Sicherheitsventil für einen Dampfdruckkochtopf mit einem in einem Ventilgehäuse axial verschiebbar gelagerten und unter Wirkung einer Ventilfeder stehenden Druckstift beschrieben. An dem Druckstift ist ein Stabmagnet angebracht, der mit dem Druckstift entsprechend dem in dem Schnellkochtopf herrschenden Druck verschoben wird. Die Verschiebung des Stabmagneten wird durch einen Hall-Sensor erfasst, der das Magnetfeld des Stabmagneten misst. Da die an dem Hall-Sensor abgreifbare Spannung in einem benutzten Messbereich weitgehend proportional zu dem in dem Dampfdrucktopf herrschenden Druck ist, lässt sich durch das Sicherheitsventil im Wesentlichen jeder Druck zwischen Null und einem oberen Grenzdruck messen. Das Signal dieses Positionssensors kann bspw. als Steuersignal zum Regeln irgendwelcher Steuergrößen benutzt werden.

Beispielsweise offenbaren die EP 2 002 765 A1 und EP 1 884 179 A2 Dampfdruckkochtöpfe, bei denen nach Erreichen eines bestimmten Schwellenwerts beispielsweise für den Druck im Kochtopf ein Zeitgeber/Zähler gestartet wird, um die Garzeit für bestimmte Lebensmittel insbesondere in Abhängigkeit von Druck- und/oder Temperaturschwankungen im Kochtopf zu überwachen und gegebenenfalls anzupassen.

Ein Problem derartiger Schnellkochtöpfe besteht darin, dass diese einige sicherheitsrelevante Verschleißteile enthalten. Verschleißteile mit sicherheitsrelevanten Funktionen müssen in regelmäßigen Abständen getauscht werden, damit der Schnellkochtopf funktionssicher bleibt. Zu diesen sicherheitsrelevanten Verschleißteilen gehören insbesondere die in den Deckeln angeordneten Dichtungsringe, welche eine dampfdichte Abdichtung von Schnellkochtopf und Deckel erlauben. Die Dichtungsringe sind üblicher Weise aus Silikon oder Nitrilkautschuk (NBR) hergestellt. Beide Materialien haben den Nachteil, dass sie einsatz- und/oder alterungsbedingt ihre Eigenschaften verändern. So kann es bspw. dazu führen, dass Sicherheitseinrichtungen nicht mehr oder erst bei zu einem hohen Druckniveau ansprechen, wenn der Dichtungsring durch häufigen Gebrauch oder übermäßiges Altern verschlissen ist. Dann können sie unter Umständen die Druckentlastungsfunktion nicht mehr zuverlässig erfüllen, wenn in dem Schnellkochtopf ein zu hoher Druck entsteht. Dies kann im schlimmsten Fall zu einem Abheben des Deckels unter hohem Druck führen und lebensgefährlich sein.

Es hat sich herausgestellt, dass die Verschleißteile bei Schnellkochtöpfen in der Praxis zu lange verwendet und zu spät ausgetauscht werden. Dies liegt auch daran, dass der Verbraucher in der Regel den Überblick verliert, wann er einen Schnellkochtopf gekauft hat und wann bspw. das letzte Mal der Dichtungsring gewechselt wurde.

Aufgabe der vorliegenden Erfindung ist es daher, eine Servicefunktion vorzuschlagen, welche den Benutzer abhängig von einer Nutzungsdauer und/oder Nutzungshäufigkeit des Schnellkochtopfes auf einen notwendigen Wechsel von Verschleißteilen hinweist.

Diese Aufgabe wird bei einem erfindungsgemäßen Druckerfassungssystem für einen Schnellkochtopf mit den Merkmalen des Anspruchs 1 gelöst. Dazu ist insbesondere vorgesehen, dass die Recheneinheit des Druckerfassungssystems dazu eingerichtet ist, bei Erreichen, d.h. Über- oder Unterschreiten, eines ersten Schwellenwertes durch den Messwert des Sensors einen Zähler weiterzuzählen, bspw. zu inkrementieren oder zu dekrementieren, und auf der Anzeige eine Benachrichtigung (in Form eines Symbols, eines Blinklichtes, eines akustischen Warntons und/oder dgl.) auszugeben, wenn ein vorgegebener Zählerwert des Zählers erreicht ist. Dazu kann der erste Schwellenwert insbesondere derart ausgewählt werden, dass dieser erst dann erreicht wird, wenn aufgrund eines Druckanstiegs in dem Schnellkochtopf mit Sicherheit auf eine Aufheizung des Schnellkochtopfes auf einem Herd geschlossen werden kann. Da dies typischerweise bei einem Kochvorgang erfolgt, können durch den Zähler die Anzahl der Kochvorgänge des Schnellkochtopfes erfasst werden, so dass durch einen vorgegebenen, ggf. auch parametrierbaren Zählerwert als Grenzwert eine Benachrichtigung auf einer Anzeige vorgegeben werden kann, wenn ein Wechsel der Verschleißteile notwendig ist.

Um Fehlzählungen durch äußere Beeinflussungen des Messwertes des Sensors bspw. beim Reinigen des Schnellkochtopfes zu vermeiden, kann die Recheneinheit gemäß einer bevorzugten Weiterentwicklung der Erfindung dazu eingerichtet sein, zu überprüfen, ob der erste Schwellenwert für eine bestimmte (erste) Zeitspanne durch den Messwert ununterbrochen erreicht wird, und den Zähler erst nach Erreichen ohne Unterbrechung des ersten Schwellenwertes für die erste Zeitspanne weiterzuzählen. Diese Zeitspanne kann bspw. einige Sekunden oder Minuten betragen; vorzugsweise liegt die Zeitspanne zwischen 10 Sekunden und 1 Minute, bspw. bei 15 oder 25 Sekunden. Hierdurch wird die Zuverlässigkeit der in das Druckerfassungssystem integrierten Verschleißanzeige signifikant erhöht.

Da gerade Dichtungsringe aus Silikon oder Nitrilkautschuk unabhängig von einer Benutzung des Schnellkochtopfs auch altersabhängig verschleißen und ihre Sicherheitsfunktion ggf. nicht mehr erfüllen, kann die Recheneinheit in Erweiterung des erfindungsgemäßen Gedankens ferner dazu eingerichtet sein, die einen notwendigen Austausch der Verschleißteile anzeigende Benachrichtigung auf der Anzeige auch dann auszugeben, wenn eine andere (zweite) Zeitspanne nach einer Initialisierung des Druckerfassungssystems abgelaufen ist. Eine Initialisierung des Systems kann bspw. durch das erstmalige Einschalten, ein erstmaliges Einsetzen einer Batterie und/oder das Ausführen einer Initialisierungsfunktion, bspw. durch Betätigung einer Taste oder Tastenkombination einer Bedienschnittstelle durch den Benutzer, erfolgen. Die zweite Zeitspanne ist typischerweise wesentlich länger als die erste Zeitspanne und liegt sinnvollerweise in einem Bereich zwischen 1 und 3 Jahren. Es kann erfindungsgemäß eine Zeitspanne von etwa 2 Jahren gewählt werden.

Damit diese Informationen bspw. bei einem notwendigen Batteriewechsel nicht verloren gehen, können der aktuelle Zählerwert und der aktuelle Ablauf der zweiten Zeitspanne (entweder durch Speichern der bereits abgelaufenen Zeit oder durch Speichern der noch verbleibenden Restzeit der zweiten Zeitspanne) in einem nicht flüchtigen Speicher, insbesondere einem Flash-Speicher, unabhängig von einer Energieversorgung des Druckerfassungssystems dauerhaft gespeichert werden. Die Rücksetzung erfolgt durch die bereits angesprochene gesonderte Initialisierungsfunktion.

Damit das Druckerfassungssystem nicht nur das Erreichen eines Schwellenwertes signalisiert, sondern auch anzeigt, ob ein solcher Schwellenwert dauerhaft gehalten wird, kann die Recheneinheit erfindungsgemäß dazu eingerichtet sein, bei Erreichen eines, d.h. des bereits erwähnten ersten oder eines weiteren, Schwellenwertes ein Schwellenwertstatussignal zu erzeugen und dieses Schwellenwertstatussignal erst wieder aufzuheben, wenn der Schwellenwert abzüglich eines Hysteresewertes nicht mehr erreicht wird. Dieser Hysteresewert kann vorzugsweise parametrierbar sein. Ziel des Hysteresewertes ist es, unnötige Schwankungen in dem Schwellenwertstatussignal zu vermeiden.

Die Funktion dieses Hysteresewertes sei nachfolgend kurz anhand eines Beispiels erläutert. Angenommen, das Druckerfassungssystem ist derart eingerichtet, dass das Schellenwertstatussignal bei steigendem Druck dann ausgelöst wird, wenn der Messwert des Sensors einen bestimmten Schwellenwert überschreitet. Dann wird dieses erreichte
Schwellenwertstatussignal erst dann wieder aufgehoben, wenn der Druck einen um den
Betrag des Hysteresewertes verminderten Wert annimmt. Hierdurch wird verhindert, dass durch Messungenauigkeiten ein ständiges An- und Abschalten des Schwellenwertstatussignals erfolgt. Natürlich lassen sich derartige Hysteresewerte auch bei entsprechend umgekehrtem Vorzeichen für einen anfangs fallenden Druck realisieren.

Gemäß einer bevorzugten Weiterentwicklung der vorliegenden Erfindung kann in dem Druckerfassungssystem auch ein Timer vorgesehen sein, der bei Erreichen eines, bspw. des ersten, insbesondere aber eines zweiten, Schwellenwertes gestartet wird, wobei der Timer nach Ablauf einer in dem Timer voreingestellten Zeit ein Zeitablaufsignal gibt. Die in dem Timer voreingestellte Zeit kann erfindungsgemäß durch eine Benutzereingabe über eine Benutzerschnittstelle vorgegeben werden. Einfacher Weise kann der Timer in der Recheneinheit als Anwendung implementiert sein.

Erfindungsgemäß kann die Recheneinheit ferner dazu eingerichtet sein, bei Erreichen eines Schwellenwertes und/oder während eines erzeugten Schwellenwertstatussignals ein Signal, insbesondere ein optisches und/oder akustisches Signal, auszugeben. Ein akustisches Signal kann bspw. ein durch ein Piezo-Element erzeugter Ton bzw. eine entsprechende Tonfolge sein, wobei das Piezo-Element einfacher Weise durch die Recheneinheit angesteuert wird.

Im Zusammenhang mit einem Schnellkochtopf ist es erfindungsgemäß besonders vorteilhaft, die nachfolgend erläuterten Schwellenwerte einzurichten und akustisch und/oder optisch anzuzeigen.

Ein erster Schwellenwert, der erfindungsgemäß auch für das Zählen des Zählers der Verschleißanzeige verwendet werden kann, kann ein Rückschaltpunkt in der Aufheizphase sein, der anzeigt, dass der Druck in dem Schnellkochtopf kurz vor Erreichen des Gardrucks liegt, der den Garzeitanfang vorgibt. Durch ein frühzeitiges Zurückschalten kann verhindert werden, dass der Druck in dem Schnellkochtopf so schnell weiter ansteigt, dass ein zu hoher Druck erzeugt wird.

Ein zweiter Schwellenwert (Garzeitanfang) kann dann bei Erreichen des Gardrucks festgelegt werden. Auch dieser Schwellenwert wird vorzugsweise akustisch angezeigt. Da dieser Schwellenwert gleichzeitig dem Garzeitanfang entspricht, startet - sofern ein Timer in das Druckerfassungssystem integriert ist - bei Erreichen dieses zweiten Schwellenwertes auch der Zeitablauf des Timers.

Ein dritter Schwellenwert gibt das Erreichen eines zu hohen Drucks an und erzeugt vorzugsweise auch ein akustisches Warnsignal.

Damit der Nutzer das Erreichen der verschiedenen Schwellwerte auch allein anhand des akustischen Signals erkennen kann, ohne auf eine optische Anzeige zu achten, kann das akustische Signal erfindungsgemäß je nach Schwellenwert anders ausgebildet sein. Dies lässt sich mit einem durch die Recheneinheit angesteuerten Piezo-akustischen Element besonders einfach realisieren.

Optional kann ein weiterer Schwellenwert, nachfolgend als nullter Schwellenwert bezeichneter Schwellenwert, so definiert werden, dass der Sensor des Druckerfassungssystems eine ordnungsgemäße Montage an einem Schellkochtopf erkennt, ohne dass in dem Schnellkochtopf ein Druck vorherrscht. Eine Auswertung dieses Schwellenwertes durch die Recheneinheit kann zur Funktionsbereitschaftsanzeige verwendet werden.

Alternativ oder insbesondere zusätzlich zu den vorerwähnten akustischen Signalen können auch optische Signale in einer optischen Anzeige erzeugt werden, wobei das optische Signal vorzugsweise jeweils nach Erreichen eines Schwellenwertes bis zum Erreichen eines anderen Schwellenwertes oder nicht mehr Erreichen dieses Schwellenwertes angezeigt wird. Dies lässt sich besonders einfach dadurch realisieren, dass das optische Signal in Abhängigkeit des Schwellenwertstatussignals erzeugt wird. Gegebenenfalls können die einzelnen optischen Signale jedoch auch jeweils bei Erreichen der verschiedenen Schwellenwerte angeschaltet und bei Erreichen eines anderen Schwellenwertes bzw. nicht mehr Erreichen dieses Schwellenwertes abgeschaltet werden.

Um die verschiedenen Schwellenwertstatussignale anzuzeigen, ist es besonders vorteilhaft, die optische Anzeige verschiedenfarbig auszubilden, bspw. durch Verwendung verschiedenfarbiger LEDs in der Anzeige des Druckerfassungssystems.

Erfindungsgemäß kann das Druckerfassungssystem auch zwei optische Anzeigen aufweisen, wobei eine Anzeige insbesondere ein LC-Display (LCD) ist und die andere Anzeige mehrere LED-Elemente verschiedener Farbe aufweist. Hierdurch ist es möglich, parallel zu den Schwellenwertstatussignalen bspw. durch Blinken verschiedenfarbiger LEDs auf dem LC-Display Informationen auszugeben, wie bspw. eine Verschleißanzeige oder die verbleibende Garzeit während der Timerfunktion.

Entsprechend einem weiteren, erfindungsgemäßen Aspekt der Erfindung kann mindestens ein Schwellenwert, eine Zeitspanne und/oder eine sonstige von der Recheneinheit verwendete Rechengröße parametrierbar sein. Beispielsweise kann das Druckerfassungssystem dazu eine Bedienschnittstelle mit Bedientasten aufweisen, über welche die Herdart (Strahlungsheizkörper mit Glaskeramikabdeckung, Gaskochplatte, Induktionskochplatte und/oder klassische Massekochplatte) eingegeben werden kann. Aufgrund eines ähnlichen Heizverhaltens können die Gas- und die Induktionskochplatte auch zusammen-gefasst behandelt werden. In diesem Fall ist die Recheneinheit dazu eingerichtet, den Schwellenwert entsprechend der eingegebenen Herdart auszuwählen. Dazu können die Schwellenwerte fest vorgegeben und in der Recheneinheit für die verschiedenen Herdarten, bspw. in Form eines Look-Up-Tables, abgelegt sein. Dies ist insbesondere für den ersten Schwellenwert von Bedeutung, wenn dieser den Rückschaltpunkt in der Aufheizphase angibt, da das Nachheizen des Herdes erheblich von der Herdart abhängt. Ein Rückschalten der Heizleistung an dem Herd bzw. der Kochstelle sollte umso früher erfolgen sollte, je länger das Nachheizen nach einem Zurückschalten der Herdleistung dauert.

Eine weitere, parametrierbare Eingabe könnte für unterschiedliche Dichtungsringe aus verschiedenen Materialien vorgesehen werden, sofern der Verschleiß dieser Dichtungsringe unterschiedlich ist. Dann können die zweite Zeitspanne zur Verschleißanzeige und/oder der Zählerwert der Verschleißanzeige bspw. In Abhängigkeit des Schwellenwertes oder über eine gesonderte Eingabe parametrierbar sein, um die Art des Dichtungsmaterials, die Herdart und/oder eine sonstige Einflussgröße mit Auswirkungen auf den Verschleiß zu berücksichtigen.

Die vorbeschriebenen und weiteren Funktionen können erfindungsgemäß in einer Recheneinheit implementiert oder auf verschiedene, eigenständige Module bzw. Recheneinheiten/Prozessoren aufgeteilt sein. Unter Kostengesichtspunkten ist es besonders vorteilhaft, wenn eine Recheneinheit sämtliche Funktionen übernimmt und die Auswertung der Sensorsignale und Ansteuerung der Anzeigen durchführt.

Als Sensoren des Druckerfassungssystems kommen grundsätzlich sehr viele verschiedene Sensortypen in Betracht. Zum einen können Sensoren ausgewählt werden, die eine unmittelbar mit dem Druck in dem Schnellkochtopf in Verbindung stehende Größe messen. Dies können bspw. auf der Innenseite des Deckels angebrachte Drucksensoren oder Temperatursensoren sein, die bspw. die Dampftemperatur messen. Die Dampftemperatur hängt typischerweise auch von dem im Schnellkochtopf herrschenden Druck ab.

Gemäß einer besonders bevorzugten Ausführungsform kann der Sensor des Druckerfassungssystems bspw. auch mittelbar den Druck in dem Schnellkochtopf erfassen, insbesondere durch Abgreifen einer in den Deckel eines Schnellkochtopfes integrierten optischen Druckanzeigeeinrichtung, die in Abhängigkeit von dem im Schnellkochtopf herrschenden Druck ihre Position verändert und damit auf optisch-mechanische Weise dem Nutzer den im Schnellkochtopf herrschenden Druck anzeigt.

Dazu ist es besonders vorteilhaft, wenn das Druckerfassungssystem eine Druckerfassungseinrichtung mit dem Sensor, der Recheneinheit und der Anzeige vorzugsweise in einem Gehäuse und die optische Druckanzeigeeinrichtung vorzugsweise in einem anderen Gehäuse aufweist, wobei die optische Druckanzeigeeinrichtung an dem Schnellkochtopf anbringbar ist und den im Inneren des Schnellkochtopfes herrschenden Druck anzeigt. Die Druckerfassungseinrichtung ist dann vorzugsweise derart an der optischen Druckanzeigeeinrichtung festgelbar, dass der Sensor zum Erfassen des Drucks mit der optischen Druckanzeigeeinrichtung zusammenwirkt, bspw. indem deren Position abgefragt wird.

In diesem Fall kommen optische, elektrisch-kapazitive oder elektrisch-induktive bzw. elektromagnetische oder magnetische Messmethoden in Frage.

Gemäß einer besonders bevorzugten Ausführungsform weist die optische Druckanzeigeeinrichtung einen axial verschiebbaren Stößel mit einem magnetischen oder magnetisierbaren Element auf, wobei der Stößel abdichtend in einer Öffnung eines Deckels des Schnellkochtopfes derart angeordnet ist, dass der Stößel bei steigendem Druck in dem Schnellkochtopf gegen eine Rückstellkraft bspw. einer Feder in Axialrichtung verschoben wird. Das Druckerfassungssystem ist nun derart an der optischen Druckanzeigeeinrichtung festlegbar, dass der Sensor in Axialrichtung über dem Stößel angeordnet ist, wobei der Sensor vorzugsweise ein Magnetfeldsensor ist. Dieser Magnetfeldsensor, bspw. ein Hall-Sensor, detektiert dann das mit Entfernung zu dem magnetischen Element variierende Magnetfeld, welches damit einen von dem Druck im Inneren des Schnellkochtopfes abgängigen Messwert erzeugt. Diese Ausgestaltung ist besonders flexibel, da die Druckerfassungseinrichtung einfach an optischen Druckanzeigeeinrichtungen verschiedener Dampfkochtöpfe festgelegt werden kann. Darüber hinaus sind die optischen Druckanzeigeeinrichtungen auch an den Deckeln der Schnellkochtöpfe einfach nachrüstbar, so dass das erfindungsgemäße Druckerfassungssystem insgesamt nachgerüstet werden kann.

Eine konstruktiv besonders einfache und zuverlässige Ausführungsform des vorbeschriebenen Druckerfassungssystems mit der optischen Druckanzeigeeinrichtung und der Druckerfassungseinrichtung in verschiedenen Gehäusen sieht vor, dass der Stößel in einem Ring der optischen Druckanzeigeeinrichtung axial verschiebbar geführt ist, wobei sich der Stößel bei einem erhöhten Druck in dem Inneren des Schnellkochtopfels aus dem Ring der optischen Anzeigeeinrichtung heraushebt. Hierdurch wird dem Benutzer sowohl optisch der in dem Schnellkochtopf herrschende Druck angezeigt als auch der Magnetfeldsensor der erfindungsgemäßen Druckerfassungseinrichtung beeinflusst.

Um erfindungsgemäß auf technisch einfache Weise verschiedene Kochstufen zu realisieren, kann der Ring der optischen Druckanzeigeeinrichtung drehbar in dem an dem Deckel des Schnellkochtopfes festgelegten Gehäuse, insbesondere einer Grundplatte, derart gelagert sein, dass durch eine Drehung des Rings gegenüber der Grundplatte die Rückstellkraft des Stößels variierbar ist. Zur Erzeugung der Rückstellkraft kann einfacherweise eine Feder eingesetzt werden, deren Rückstellkraft bspw. dadurch variierbar ist, dass eine Änderung der Federvorspannung erfolgt, wobei der Stößelhubweg in der optischen Druckanzeigeeinrichtung unverändert bleibt. Derselbe Hub entspricht nach Drehung des Rings der optischen Druckanzeigeeinrichtung dann einem anderen Druckwert im Inneren des Schnellkochtopfes; die eingestellten Schwellenwerte, die von dem Stößelhub abhängen, werden dadurch jedoch nicht berührt, so dass die festgelegten Schellenwerte lediglich anderen Druckwerten im Inneren des Schnellkochtopfes entsprechen. So kann die Druckerfassungseinrichtung erfindungsgemäß ohne die Notwendigkeit einer Parametrierung auch bei verschiedenen Kochstufen in gleicherweise arbeiten.

Eine besonders einfache Ausgestaltung der Druckerfassungseinrichtung sieht vor, dass diese zwei dem Ring der optischen Druckanzeigeeinrichtung im Durchmesser angepasste, teilringförmige Rastarme aufweist, die auf den Ring aufsteckbar sind. Dazu sind die teilringförmigen Rastarme zumindest so flexibel ausgebildet, dass sie sich auf den Ring der optischen Druckanzeigeeinrichtung aufbringen lassen und die Druckerfassungseinrichtung dort festklemmen. Insbesondere wenn der Sensor erfindungsgemäß im axialen Zentrum der teilringförmigen Rastarme angeordnet ist, kann die Druckerfassungseinrichtung in jeder beliebigen Drehstellung auf dem Ring der optischen Druckanzeigeeinrichtung aufgesteckt werden, wodurch die Bedienbarkeit der Druckerfassungseinrichtung verbessert wird, da diese immer optimal zum Benutzer ausgerichtet werden kann.

Um ggf. durch einen Kundendienst das Druckerfassungssystem an eine Alterung des Gerätes, bspw. des Magnetfeldsensors, anpassen lassen zu können, kann die Recheneinheit erfindungsgemäß dazu eingerichtet sein, nach einer entsprechenden Eingabe in einen Kalibriermodus zu wechseln, in dem u.a. ein oder mehrere Schwellenwerte einstellbar sind. Dieser Kalibriermodus kann bspw. durch eine Tastenkommunikation der Bedienschnittstelle eingeleitet werden.

Gemäß einem weiteren Aspekt des erfindungsgemäßen Druckerfassungssystems kann in dem Druckerfassungssystem ein insbesondere in Verbindung mit der Recheneinheit stehendes Kommunikationsmodul zur drahtlosen Kommunikation mit einem Herd bzw. einer Heizleistungsregelung oder -steuerung eines Herdes vorgesehen sein. Die Recheneinheit ist dann vorzugsweise dazu eingerichtet ist, im Fall des Erreichens eines Schwellenwertes eine Mitteilung an den Herd bzw. die Heizleistungsregelung oder-Steuerung zu senden. Hierdurch kann die Heizleistung automatisch so eingeregelt oder eingestellt werden, dass während des Garvorgangs der gewünschte Druck in dem Schnellkochtopf eingehalten wird. Dies führt zum einen zu einem energieoptimiertem Heizen und stellt zum anderen eine Sicherheitsfunktion dar, da bei Überschreiten des Schwellenwertes für einen zu hohen Druck die Heizleistung sofort reduziert werden kann. Da eine Überhitzung des Schnellkochtopfes auch zu einem erhöhten Verschleiß führt, wird hierdurch auch der Verschleiß reduziert und eine zuverlässige Verschleißanzeige begünstigt. Dieses Signal kann dann auch bei der Steuerung oder Regelung automatischer Kochvorgänge verwendet werden, um ein besseres Kochergebnis durch optimale Einstellung des Gardrucks zu erzielen.

Weitere Vorteile, Merkmale und Anwendungsmöglichkeiten der vorliegenden Erfindung ergeben sich auch aus der nachfolgenden Beschreibung der Ausführungsbeispiele und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: ein erfindungsgemäßes Druckerfassungssystem mit Druckerfassungseinrichtung in einer dreidimensionalen Ansicht;
- Fig. 2: das erfindungsgemäße Druckerfassungssystem mit Druckerfassungseinrichtung und optischer Druckanzeigeeinrichtung in einer dreidimensionalen Ansicht;
- Fig. 3: die Druckerfassungseinrichtung in einem Querschnitt; und
- Fig. 4: die optische Druckanzeigeeinrichtung in einem Querschnitt.

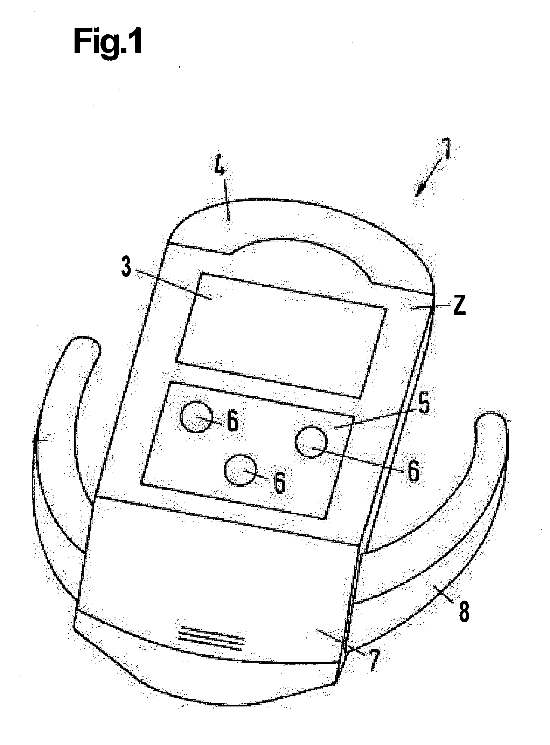

In Fig. 1 ist die Druckerfassungseinrichtung 2 des erfindungsgemäßen Druckerfassungssystems 1 dargestellt, in welcher mit einer Verschleißanzeige für Verschleißteile eines Schnellkochtopfes ein wesentlicher Aspekt der vorliegenden Erfindung realisiert ist. Auch das nur durch diese Druckerfassungseinrichtung 2 gebildete Druckerfassungssystem 1 bildet daher die vorliegende Erfindung.

Die Druckerfassungseinrichtung 2 weist eine erste Anzeige 3 auf, die als LC-Display (LCD) ausgebildet ist und auf der verschiedene Informationen textlich oder durch Symbole dargestellt werden können. Ferner ist eine zweite Anzeige 4 vorgesehen, die durch mehrere, verschiedenfarbige Leuchtdioden (LED) unter einer transparenten Abdeckung gebildet ist. Ferner weist die Druckerfassungseinrichtung 2 eine Bedienschnittstelle 5 mit Bedientasten 6 auf, durch welche der Benutzer Eingaben in der Druckerfassungseinrichtung 2 vornehmen kann, die vorzugsweise im Zusammenwirken mit der ersten und/oder zweiten optischen Anzeige 4 vorgenommen werden können.

Beispielsweise kann die Druckerfassungseinrichtung 2 einen Timer aufweisen, so dass über die Bedienschnittstelle 5 eine Zeit voreingestellt werden kann, nach der der Timer ein Zeitablaufsignal gibt. Diese voreingestellte Zeit kann dann auf der ersten Anzeige 3 dargestellt werden. Ferner kann die Bedienschnittstelle 5 zur Eingabe von Parametern verwendet werden, wie später noch erläutert wird.

Die Energieversorgung der Druckerfassungseinrichtung 2 erfolgt durch eine in einem verschließbaren Batteriefach 7 angeordnete Batterie.

Zum Festlegen an einem Schnellkochtopf bzw. einer optischen Druckanzeigeeinrichtung 9 sind in der dargestellten Ausführungsform der Druckerfassungseinrichtung 2 zwei teilringförmige Rastarme 8 vorgesehen, mit welchen die Druckerfassungseinrichtung 2 an einem kreisförmigen Element durch Aufrasten der Rastarme in beliebiger Drehrichtung aufgesteckt werden kann. Es versteht sich, dass die vorliegende Erfindung nicht auf diese besonders bevorzugte Befestigungsart festgelegt ist, sondern auch andere geeigneten Befestigungsmethoden verwendet werden können.

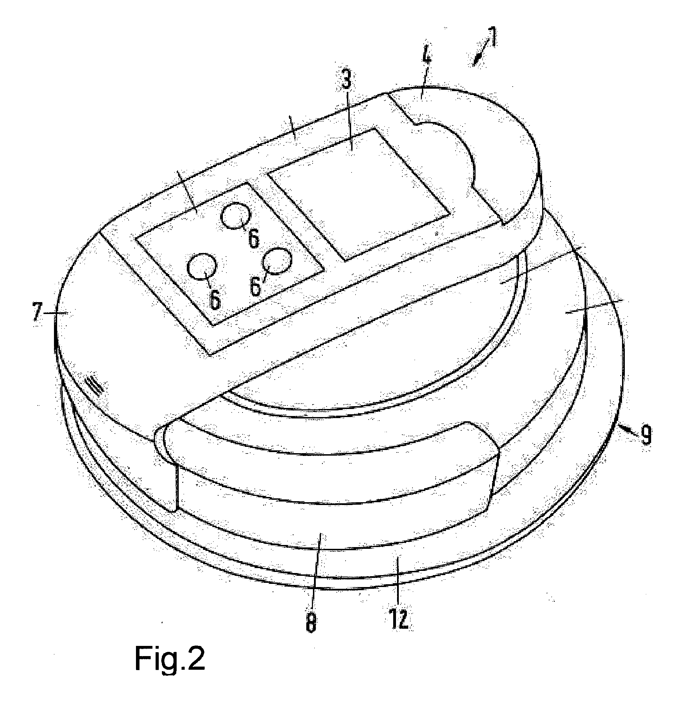

Die zuvor erwähnte Art der Festlegung der Druckerfassungseinrichtung 2 an einer optischen Druckanzeigeeinrichtung 9 des Druckerfassungssystems 1 ist in Fig. 2 dargestellt. Die optische Druckanzeigeeinrichtung 9 ist an dem Deckel eines Schnellkochtopfes anbringbar und zeigt den im Inneren des Schnellkochtopfes herrschenden Druck an. Dazu weist die optische Druckanzeigeeinrichtung 9 einen axial verschiebbaren Stößel 10 auf, der in Richtung der zentralen Achse des zylindrisch ausgebildeten Stößels 10 verschiebbar ist. Der Stößel 10 ist abdichtend mit einer Öffnung des Deckels des Schnellkochtopfes verbunden, so dass der Stößel bei steigendem Druck in dem Schnellkochtopf gegen eine Rückstellkraft verschoben wird. Dabei tritt der Stößel 10 aus einem Ring 11 der optischen Druckanzeigeeinrichtung 9 in Axialrichtung heraus, so dass der axial verschiebbare Stößel 10 über den Ring 11 in Richtung der Druckerfassungseinrichtung 2 hinausragt. Hierdurch wird zunächst eine optische Druckanzeige realisiert, wobei auf der in Fig. 2 nicht erkennbaren Seitenwand des axial verschiebbaren Stößels 10 bspw. farbliche Markierungen zur Identifikation verschiedener Druckbereiche vorgesehen sein können.

Der Ring 11 ist auf einer Grundplatte 12 gelagert, die auf dem Deckel 19 des Schnellkochtopfes festgelegt wird und Teil des Gehäuses der optischen Druckanzeigeeinrichtung 9 ist. Der Ring 11 ist relativ zu der Grundplatte 12 und dem axial verschiebbaren Stößel 10 verdrehbar, wobei ein in Fig. 2 nicht dargestelltes Rückstellelement 21 in seiner Rückstellkraft verändert wird, welches den axial verschiebbaren Stößel 10 in Richtung der Grundplatte 12 vorspannt. Hierdurch können die Abhängigkeit des Hubs des Stößels 12 von dem im Inneren des Schnellkochtopfes herrschenden Drucks angepasst und verschiedene Kochstufen eingestellt werden.

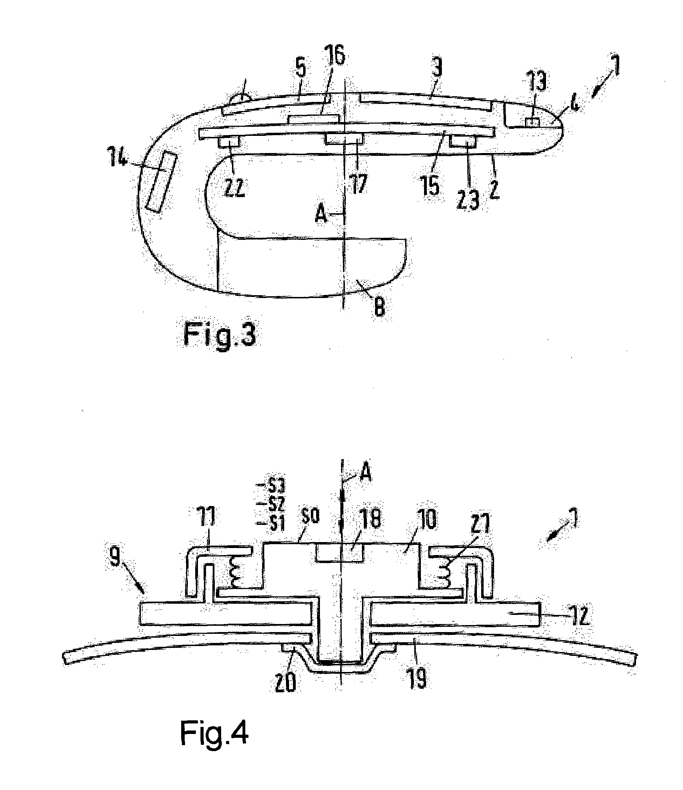

Die genaue Funktion der vorliegenden Erfindung wird nachfolgend anhand der Fig. 3 und 4 erläutert, welche das Druckerfassungssystem 1 in einer Schnittzeichnung zeigen. Der Kern der Erfindung ist dabei die in Fig. 3 dargestellte Druckerfassungseinrichtung 2, die mit einer optischen Druckanzeigeeinrichtung 9 gemäß Fig. 4 zusammenwirkt. Die optische Druckanzeigeeinrichtung 9 ist eine Möglichkeit, wie dem Sensor 17 der Druckerfassungseinrichtung 2 der in dem Inneren des Schellkochtopfes herrschende Druck übermittelt werden kann. Die Erfindung ist hierauf jedoch nicht beschränkt.

In der schematischen Schnittzeichnung der mit der optischen Druckanzeigeeinrichtung 9 zusammenwirkenden Druckerfassungseinrichtung 2 gemäß Fig. 3 sind das LC-Display der ersten Anzeige 3 und die Leuchtdiode (LED) 13 der zweiten Anzeige 4 zu erkennen, wobei die zweite Anzeige 4 mehrere LEDs 13 umfasst, die auch unterschiedliche Farben aufweisen können. Ferner ist die Bedienschnittstelle 5 mit einer Bedientaste 6 dargestellt.

Die Energieversorgung erfolgt durch eine Batterie 14, welche in dem in der schematischen Schnittzeichnung nicht dargestellten Batteriefach 7 aufgenommen ist und die elektronischen Bauteile der Druckerfassungseinrichtung 2 des Druckerfassungssystems 1 mit Energie versorgt.

Auf der der ersten Anzeige 3 und der Bedienschnittstelle 5 gegenüberliegenden Seite der Druckerfassungseinrichtung 2 sind zwei Rastarme 8 zum Festlegen der Druckerfassungseinrichtung 2 an der optischen Druckanzeigeeinrichtung 9 vorgesehen, von denen in der Schnittzeichnung nur einer zu erkennen ist.

Im Inneren der Druckerfassungseinrichtung 2 ist eine Platine 15 angeordnet, auf der sich eine Recheneinheit 16 und der Sensor 17 zum Erfassen des in dem Inneren des Schnellkochtopfes herrschenden Drucks befinden. Der Sensor 17 ist als Magnetfeldsensor, insbesondere als Hall-Sensor, ausgebildet und auf der den Rastarmen 8 der Druckerfassungseinrichtung 2 zugewandten Seite der Platine 15 angeordnet. Dabei ist der Sensor 17 derart auf der Platine 15 positioniert, dass er im Bereich der Mittelpunktachse A des durch die teilringförmigen Rastarme 8 der Druckerfassungseinrichtung 2 definierten Kreises angeordnet ist.

Der Sensor 17 erfasst das Magnetfeld eines magnetischen Elements 18, insbesondere eines Permanentmagneten, welches in dem axial verschiebbaren Stößel 10 der optischen Druckanzeigeeinrichtung 9 angeordnet und in Fig. 4 dargestellt ist. Der von dem Sensor

17 erzeugte Messwert ist von der Stärke des Magnetfeldes im Bereich des Sensors 17 abhängig, das wiederum eine Funktion des Abstandes des magnetischen Elements 18 von dem Sensor 17 ist.

Wie der schematischen Schnittzeichnung gemäß Fig. 4 zu entnehmen, ist die optische Druckanzeigeeinrichtung 9 derart an einem Deckel 19 eines Schnellkochtopfes festlegbar, dass der axial verschiebbare Stößel 10 durch die Wandung des Deckels 19 in das Innere des Schnellkochtopfes hindurch ragt. Das Innere des Schnellkochtopfes ist durch eine flexible Dichtung 20 derart abgedichtet, dass das in das Innere des Schnellkochtopfes hineinragende Ende des Stößels 10 von außen an der flexiblen Dichtung 20 anliegt. Wenn in dem Inneren des Schnellkochtopfes kein Druck aufgebaut ist, liegt der Stößel 10 daher unter Vorspannung auf der Grundplatte 12 der optischen Druckanzeigeeinrichtung 9 auf, welche ihrerseits auf dem Deckel 19 aufliegt und dort geeignet befestigt ist. Die Befestigungsmittel sind der Übersichtlichkeit halber in der schematischen Schnittzeichnung gemäß Fig. 4 nicht dargestellt.

Die Vorspannung des Stößels 10 in Richtung der Grundplatte 12 wird durch ein Rückstellelement 21 in Form einer Feder erreicht, welche auf der einen Seite an einem Flansch des Stößels 10 aufliegt und auf der anderen Seite an dem Ring 11 der optischen Druckanzeigeeinrichtung 9 befestigt ist. Durch eine Drehung des Rings 11 kann die Vorspannung der Feder 21 geändert und damit die Stärke der Rückstellkraft variiert werden.

Es versteht sich, dass Fig. 4 insoweit lediglich schematisch die Funktion der optischen Druckanzeigeeinrichtung 9 wiedergibt, die in ihrem konkreten Aufbau durch den Fachmann auch anders gelöst sein kann, ohne den Gegenstand der vorliegenden Erfindung, nämlich das Erfassen des durch das magnetische Element 18 erzeugte Magnetfeld mit dem Sensor 17 der Druckerfassungseinrichtung 2 insbesondere zur Realisierung einer Verschleißanzeige sowie ggf. weiterer Funktionen, zu verlassen.

Durch den zuvor beschriebenen Aufbau der optischen Druckanzeigeeinrichtung 9 wird der flexible Stößel 10 durch die Dichtung 20 gegen die Rückstell kraft des Rückstellelementes 21 von der Grundplatte 12 weg (in der Zeichnung in Richtung oben) gedrückt, wenn sich im Inneren des Schnellkochtopfes ein Druck 10 aufbaut, dessen
Druckkraft die Rückstellkraft der Feder bzw. allgemeiner des Rückstellelementes 21 übersteigt.

Hierdurch wird, wenn die Druckerfassungseinrichtung 2 wie in Fig. 2 dargestellt auf dem Ring 11 der optischen Druckanzeigeeinrichtung 9 festgelegt ist, der Abstand zwischen dem ebenfalls auf der Mittelpunktachse A des Rings 11 angeordneten magnetischen Elements 18 und dem Sensor 17 verringert, so dass das durch den Sensor 17 detektierte Magnetfeld stärker wird. Da der Stößel 10 mit steigendem Druck immer weiter von der Grundplatte 12 in Richtung des Sensors 17 bewegt wird, nimmt das durch den Sensor 17 detektierte Magnetfeld zu, was zu einem erhöhten Messwert des Sensors 17 führt, bis der Stößel 10 am Ende seines durch den Ring 11 begrenzten Stellwegs anlangt.

Die Recheneinheit 16 ist nun dazu eingerichtet, die durch den Sensor 17 ausgegebenen Messwerte zu erfassen und auszuwerten. Dazu sind in der Recheneinheit 16 Schwellenwerte SO, S1, S2 und S3 definiert, welche verschiedenen Hubwegen des Stößels 10 bei verschiedenen Druckwerten im Inneren des Schnellkochtopfes entsprechen.

Ein erster Schwellenwert S1 ist dabei so definiert, dass dieser einen Druckwert anzeigt, der noch unterhalb des eigentlich erwünschten Gardrucks liegt und anzeigt, dass die Wärmeleistung des Herdes bereits reduziert werden kann, um in Kürze den Gardruck zu erreichen, welcher dem zweiten Schwellenwert S2 entspricht (Garzeitanfang). Der dritte Schwellenwert S3 zeigt schließlich einen zu hohen Druck in dem Inneren des Schnellkochtopfes an, was eine sofortige Reduktion der Wärmezufuhr des Herdes zu dem Schnellkochtopf erfordert.

Ferner kann ein weiterer, nullter Schwellenwert SO definiert werden, welcher das durch das magnetische Element 18 in dem Sensor 17 erzeugte Magnetfeld charakterisiert, wenn die Druckerfassungseinrichtung 2 auf die optische Druckanzeigeeinrichtung 9 in funktionsrichtiger Weise aufgesetzt ist, wobei sich der Stößel 10 noch in seiner vorgespannten Stellung befindet. Dies kann zur Überprüfung sowie ggf. Anzeige einer funktionsgerechten Montage der Druckerfassungseinrichtung 2 verwendet werden.

Die Recheneinheit 16 ist dazu eingerichtet, bei Erreichen des ersten, zweiten und dritten Schwellenwerte S1, S2, S3 jeweils ein unterschiedliches akustisches Signal zu erzeugen, das über ein auf der Platine montiertes Piezo-Element 22 ausgegeben wird.
Ein derartiges Piezo-Element 22 bildet daher die akustische Anzeige des Druckerfassungssystems 1.

Ferner werden bei Überschreiten der Schwellenwerte SO, S1, S2, S3 jeweils Schwellenwertstatussignale erzeugt, die solange aufrechterhalten werden, bis der Schwellenwert SO, S1, S2, S3 abzüglich einer parametrierbaren Hysterese unterschritten oder der nächsthöhere Schwellenwert S1, S2, S3 erreicht wird. Dieses von der Recheneinheit 16 erzeugte Signal wird durch Leuchten bzw. Blinken verschiedenfarbiger LEDs 13 in der zweiten Anzeige 4 angezeigt, so dass der Nutzer auch eine optische Information über den Status des Schnellkochtopfes erhält.

Bei Überschreiten des zweiten Schwellenwertes S2 kann die Recheneinheit 16 dazu eingerichtet sein, einen Timer zu starten, der im Sinne eines Kurzzeitweckers die Garzeit herunterzählt und nach Ablauf der voreingestellten Garzeit ein optisches, akustisches und/oder sonstiges Signal aussendet. Die noch verbleibende Garzeit kann dabei in der ersten optischen Anzeige 3 angezeigt werden.

Unabhängig davon, ob einige oder alle der zuvor beschriebenen Merkmale oder Funktionen bei der vorliegenden Erfindung realisiert sind, ist die Recheneinheit in jedem Fall dazu eingerichtet, bei Erreichen des ersten Schwellenwertes Sleinen in der Recheneinheit 16 implementierten Zähler weiterzuzählen, sofern der Schwellenwert S1 während einer vorgegebenen ersten Zeitspanne von vorzugsweise 15 bis 25 Sekunden ununterbrochen erreicht oder überschritten ist. Das Erreichen dieses Schwellenwertes S1 wird als Indiz dafür gewertet, dass ein Kochvorgang stattfindet.

Da insbesondere der in dem Deckel 19 des Schnellkochtopfes angeordnete Dichtring in Abhängigkeit von der Benutzung des Schnellkochtopfes verschleißt, wird durch diesen Zähler ein Verschleißzähler implementiert, so dass bei Erreichen eines vorgegebenen Zählerwerts eine Service- bzw. Verschleißanzeige auf der ersten Anzeige 3 und/oder zweiten Anzeige 4 ausgegeben werden kann, welche den Nutzer an den Austausch eines Dichtrings erinnert.

Parallel dazu kann die Recheneinheit 16 auch dazu eingerichtet sein, die Service- bzw. Verschleißanzeige als Benachrichtigung auf der Anzeige 3, 4 auch dann auszugeben, wenn eine zweite Zeitspanne von bspw. 2 Jahren nach einer Initialisierung des Systems abgelaufen ist. Die Initialisierung wird durch erstmaliges Einschalten, erstmaliges Einsetzen der Batterie oder Ausführen einer Initialisierungsfunktion ausgelöst, wobei die Initialisierungsfunktion bspw. durch eine spezielle Eingabe in der Bedienschnittstelle 5 ausgelöst werden kann.

Durch diese Funktion wird eine individuelle, die Nutzungs- und die Standzeiten eines Schnellkochtopfes berücksichtigende Verschleißanzeige geschaffen, die dazu beiträgt, die Sicherheit der Schnellkochtöpfe zu erhöhen.

Als weiteres, optionales Merkmal kann auf der Platine ein Kommunikationsmodul 23 zur drahtlosen Kommunikation mit einem Herd vorgesehen sein, wobei die Recheneinheit 16 dazu eingerichtet ist, im Fall des Erreichens eines Schwellenwertes SO, S1, S2, S3 oder mehrerer Schwellenwerte SO, S1, S2, S3 eine dem jeweiligen Schwellenwert SO, S1, S2, S3 zugeordnete Mitteilung an den 10 Herd zu senden. Hierdurch kann bspw. das Rückschalten des Herdes bei Erreichen des ersten Schwellenwertes S1 oder das Ausschalten des Herdes bei Erreichen des dritten Schwellenwertes S3 automatisch vorgenommen werden.

### Bezugszeichenliste:

- 1: Druckerfassungssystem
- 2: Druckerfassungseinrichtung
- 3: erste Anzeige
- 4: zweite Anzeige
- 5: Bedienschnittstelle
- 6: Bedientasten
- 7: Batteriefach
- 8: Rastarm
- 9: optische Druckanzeigeeinrichtung
- 10: axial verschiebbare Stößel
- 11: Ring
- 12: Grundplatte
- 13: Leuchtdiode (LED)
- 14: Batterie
- 15: Platine
- 16: Recheneinheit
- 17: Sensor
- 18: magnetisches Element
- 19: Deckel
- 20: flexible Dichtung
- 21: Rückstellelement, Feder
- 22: Piezo-Element
- 23: Kommunikationsmodul

- A: Mittelpunktachse

- SO: nullter Schwellenwert
- S1: erster Schwellenwert

- S2: zweiter Schwellenwert

- S3: dritter Schwellenwert

## Patentansprüche

1. Druckerfassungssystem für einen Schnellkochtopf mit einem Sensor (17) zum Erfassen eines in dem Inneren des Schnellkochtopfes herrschenden Drucks mittels Messwerten, einer mit dem Sensor (17) verbundenen Recheneinheit (16) und einer Anzeige (3, 4), wobei die Recheneinheit (16) dazu eingerichtet ist, die von dem Sensor (17) gelieferten Messwerte auszuwerten und das Erreichen mindestens eines ersten Schwellenwertes (S1) festzustellen, **dadurch gekennzeichnet, dass** die Recheneinheit (16) weiter dazu eingerichtet ist, bei Erreichen des ersten Schwellenwertes (S1) durch den Messwert einen Zähler welterzuzählen und auf der Anzeige (3, 4) eine Benachrichtigung auszugeben, wenn ein vorgegebener Zählerwert des Zählers erreicht ist, wobei jedes Erreichen des ersten Schwellenwertes (S1) durch den Messwert als Indiz dafür gewertet wird, dass ein Kochvorgang stattfindet und der Zähler die Anzahl der Kochvorgänge erfasst.

2. Druckerfassungssystem nach Anspruch 1, **dadurch gekennzeichnet, dass** die Recheneinheit (16) dazu ausgebildet ist, zu überprüfen, ob der erste Schwellenwert (S1) für eine erste Zeitspanne durch den Messwert ununterbrochen erreicht wird, und den Zähler erst nach Erreichen des ersten Schwellenwerts (S1) ohne Unterbrechung für die erste Zeitspanne weiterzuzählen.

3. Druckerfassungssystem nach Anspruch 1 oder 2, **dadurch gekennzeichnet, dass** die Recheneinheit (16) dazu eingerichtet ist, die Benachrichtigung auf der Anzeige (3, 4) auszugeben, wenn eine zweite Zeitspanne nach der Initialisierung des Systems abgelaufen ist.

4. Druckerfassungssystem nach einem der vorhergehenden Ansprüche, **dadurch gekennzeichnet, dass** die Recheneinheit (16) dazu eingerichtet ist, bei Erreichen eines Schwellenwerts (S0, S1, S2, S3) ein Schwellenwertstatussignal zu erzeugen und dieses Schwellenwertstatussignal wieder aufzuheben, wenn der Schwellenwert (S0, S1, S2, S3) abzüglich eines Hysteresewerts nicht mehr erreicht wird.

5. Druckerfassungssystem nach einem der vorhergehenden Ansprüche, **dadurch gekennzeichnet, dass** ein Timer vorgesehen ist, der bei Erreichen eines Schwellenwertes (S2) gestartet wird und nach Ablauf einer in dem Timer voreingestellten Zeit ein Zeitablaufsignal gibt.

6. Druckerfassungssystem nach einem der vorhergehenden Ansprüche, **dadurch gekennzeichnet, dass** die Recheneinheit (16) dazu eingerichtet ist, bei Erreichen eines Schwellenwertes (S0, S1, S2, S3) und/oder während eines erzeugten Schwellenwertstatussignals ein Signal auszugeben.

7. Druckerfassungssystem nach einem der vorhergehenden Ansprüche, **dadurch gekennzeichnet, dass** zwei optische Anzeigen (3, 4) vorgesehen sind, wobei eine Anzeige (3) insbesondere ein LC-Display ist und die andere Anzeige (4) insbesondere mehrere LED-Elemente verschiedener Farbe aufweisen.

8. Druckerfassungssystem nach einem der vorhergehenden Ansprüche, **dadurch gekennzeichnet, dass** mindestens ein Schwellenwert (S0, S1, S2, S3), eine Zeitspanne und/oder eine sonstige von der Recheneinheit (16) verwendete Rechengröße parametrierbar ist.

9. Druckerfassungssystem nach einem der vorhergehenden Ansprüche, **dadurch gekennzeichnet, dass** das Druckerfassungssystem (1) eine Druckerfassungseinrichtung (2) mit dem Sensor (17), der Recheneinheit (16) und der Anzeige (3, 4) und eine optische Druckanzeigeeinrichtung (9) aufweist, welche an dem Schnellkochtopf anbringbar ist und den in dem Inneren des Schnellkochtopfes herrschenden Druck anzeigt, wobei die Druckerfassungseinrichtung derart an der optischen Druckanzeigeeinrichtung (9) festlegbar ist, dass der Sensor (17) zum Erfassen des Drucks mit der optischen Druckanzeigeeinrichtung (9) zusammenwirkt.

10. Druckerfassungssystem nach Anspruch 9, **dadurch gekennzeichnet, dass** die optische Druckanzeigeeinrichtung (9) einen axial verschiebbaren Stößel (10) mit einem magnetischen oder magnetisierbaren Element (18) aufweist, wobei der Stößel (10) abdichtend in einer Öffnung eines Deckels (19) des Schnellkochtopfes angeordnet ist derart, dass der Stößel (10) bei steigendem Druck in dem Schnellkochtopf gegen eine Rückstellkraft in Axialrichtung verschoben wird, und dass die Druckerfassungseinrichtung (2) derart an der optischen Druckanzeigeeinrichtung (9) festlegbar ist, dass der Sensor (17) in Axialrichtung über dem Stößel (10) angeordnet ist.

11. Druckerfassungssystem nach Anspruch 10, **dadurch gekennzeichnet, dass** der Stößel (10) in einem Ring (11) der optischen Druckanzeigeeinrichtung (9) axial verschiebbar geführt ist, wobei sich der Stößel (10) bei einem erhöhten Druck in dem Inneren des Schnellkochtopfes aus dem Ring (11) der optischen Druckanzeigeeinrichtung heraushebt.

12. Druckerfassungssystem nach Anspruch 11, **dadurch gekennzeichnet, dass** der Ring (11) der optischen Druckanzeigeeinrichtung (9) drehbar an einer an dem Deckel (19) des Schnellkochtopfes festgelegten Grundplatte (12) gelagert derart ist und dass durch eine Drehung des Rings (11) gegenüber der Grundplatte (12) die Rückstellkraft des Stößels (10) variierbar ist.

13. Druckerfassungssystem nach Anspruch 11 oder 12, **dadurch gekennzeichnet, dass** die Druckerfassungseinrichtung (2) zwei dem Ring (11) der optischen Druckanzeigeeinrichtung (9) im Durchmesser angepasste, teilringförmige Rastarme (8) aufweist, die auf den Ring (11) aufsteckbar sind.

14. Druckerfassungssystem nach einem der vorhergehenden Ansprüche, **dadurch gekennzeichnet, dass** die Recheneinheit (16) dazu eingerichtet ist, einen Kalibriermodus aufrufen zu können, in dem ein oder mehrere Schwellenwerte (S0, S1, S2, S3) einstellbar sind.

15. Druckerfassungssystem nach einem der vorhergehenden Ansprüche, **dadurch gekennzeichnet, dass** ein Kommunikationsmodul (23) zur drahtlosem Kommunikation mit einem Herd vorgesehen ist, wobei die Recheneinheit (16) dazu eingerichtet ist, im Fall des Erreichens eines Schwellenwertes (S0, S1, S2, S3) mittels des Kommunikationsmoduls (23) eine Mitteilung an den Herd zu senden.

## Claims

1. A pressure detection system for a pressure cooker with a sensor (17) for detecting a pressure prevailing in the interior of the pressure cooker by means of measured values, a computing unit (16) connected to the sensor (17), and a display (3, 4), wherein the computing unit (16) is configured for evaluating the measured values supplied by the sensor (17) and to establish that at least one first threshold value (S1) has been reached, **characterised in that** the computing unit (16) is further configured to increment a counter upon the first threshold value (S1) being reached by the measured value and to output a notification on the display (3, 4) when a predefined counter value of the counter has been reached, wherein every instance of the first threshold value (S1) being reached by the measured value is judged to be an indication of a cooking process taking place and the counter captures the number of cooking processes.

2. The pressure detection system according to claim 1, **characterised in that** the computing unit (16) is configured to check whether the first threshold value (S1) is reached by the measured value without interruption for a first period of time, and to increment the counter only when the first threshold value (S1) has been reached without interruption for the first period of time.

3. The pressure detection system according to claim 1 or 2, **characterised in that** the computing unit (16) is configured to output the notification on the display (3, 4) when a second period of time after the initialisation of the system has expired.

4. The pressure detection system according to any one of the preceding claims, **characterised in that** the computing unit (16) is configured to generate a threshold value status signal upon a threshold value (S0, S1, S2, S3) being reached and to cancel this threshold value status signal when the threshold value (S0, S1, S2, S3), minus a hysteresis value, is no longer being reached.

5. The pressure detection system according to any one of the preceding claims, **characterised in that** a timer is provided, which is started upon a threshold value (S2) being reached, and which outputs a time-expired signal after the expiry of a time preset in the timer.

6. The pressure detection system according to any one of the preceding claims, **characterised in that** the computing unit (16) is configured to output a signal upon a threshold value (S0, S1, S2, S3) being reached and/or during a generated threshold value status signal.

7. The pressure detection system according to any one of the preceding claims, **characterised in that** two visual displays (3, 4) are provided, wherein one display (3) is, in particular, an LC display, and the other display (4) has, in particular, several LED elements with different colours.

8. The pressure detection system according to any one of the preceding claims, **characterised in that** at least one threshold value (S0, S1, S2, S3), a period of time and/or other computing quantity used by the computing unit (16) is parameterisable.

9. The pressure detection system according to any one of the preceding claims, **characterised in that** the pressure detection system (1) has a pressure detection device (2) with the sensor (17), the computing unit (16) and the display (3, 4) and a visual pressure indicating device (9), which can be attached to the pressure cooker and indicates the pressure prevailing in the interior of the pressure cooker, wherein the pressure detection device can be fixed to the visual pressure indicating device (9) in such a way that the sensor (17) for detecting the pressure cooperates with the visual pressure indicating device (9).

10. The pressure detection system according to claim 9, **characterised in that** the visual pressure indicating device (9) has an axially displaceable plunger (10) with a magnetic or magnetisable member (18), wherein the plunger (10) is disposed sealingly in an opening of a lid (19) of the pressure cooker in such a way that the plunger (10) is displaced against a restoring force in the axial direction in the case of rising pressure in the pressure cooker, and that the pressure detection device (2) can be fixed to the visual pressure indicating device (9) in such a way that the sensor (17) is disposed in the axial direction above the plunger (10).

11. The pressure detection system according to claim 10, **characterised in that** the plunger (10) is guided in an axially displaceable manner in a ring (11) of the visual pressure indicating device (9), wherein the plunger (10) rises out of the ring (11) of the visual pressure indicating device in the case of an increased pressure in the interior of the pressure cooker.

12. The pressure detection system according to claim 11, **characterised in that** the ring (11) of the visual pressure indicating device (9) is rotatably mounted on a base plate (12) fixed to the lid (19) of the pressure cooker and that the restoring force of the plunger (10) can be varied by a rotation of the ring (11) relative to the base plate (12).

13. The pressure detection system according to claim 11 or 12, **characterised in that** the pressure detection device (2) has two partial-ring-shaped latching arms (8), which are adapted to the ring (11) of the visual pressure indicating device (9) with regard to the diameter and which can be fitted onto the ring (11).

14. The pressure detection system according to any one of the preceding claims, **characterised in that** the computing unit (16) is configured for being able to call up a calibrating mode in which one or more threshold values (S0, S1, S2, S3) can be set.

15. The pressure detection system according to any one of the preceding claims, **characterised in that** a communication module (23) for the wireless communication with a range is provided, wherein the computing unit (16) is configured to transmit a notification to the range by means of the communication module (23) in the case of a threshold value (S0, S1, S2, S3) being reached.

## Revendications

1. Système de détection de pression pour un autocuiseur, comprenant un capteur (17) destiné à détecter au moyen de valeurs mesurées une pression régnant à l'intérieur de l'autocuiseur, une unité de calcul (16) reliée audit capteur (17) et un indicateur (3, 4), ladite unité de calcul (16) étant agencée pour évaluer les valeurs mesurées fournies par ledit capteur (17) et pour constater qu'au moins une première valeur de seuil (S1) est atteinte, **caractérisé par le fait que** ladite unité de calcul (16) est agencée en outre pour, lorsque la première valeur de seuil (S1) est atteinte par la valeur mesurée, continuer le comptage d'un compteur et pour faire sortir sur ledit indicateur (3, 4) une information lorsqu'une valeur de compteur donnée du compteur est atteinte, chaque fait que ladite première valeur de seuil (S1) est atteinte par la valeur mesurée étant considéré comme un indice qu'une opération de cuisson a lieu et que le compteur enregistre le nombre des opérations de cuisson.

2. Système de détection de pression selon la revendication 1, **caractérisé par le fait que** ladite unité de calcul (16) est conçue pour vérifier si la première valeur de seuil (S1) est atteinte de façon continue pour un premier laps de temps par la valeur mesurée et pour ne continuer le comptage du compteur qu'après que la première valeur de seuil (S1) est atteinte sans interruption pour ledit premier laps de temps.

3. Système de détection de pression selon la revendication 1 ou 2, **caractérisé par le fait que** ladite unité de calcul (16) est agencée pour faire sortir l'information sur ledit indicateur (3, 4) lorsqu'un second laps de temps s'est écoulé après l'initialisation du système.

4. Système de détection de pression selon l'une quelconque des revendications précédentes, **caractérisé par le fait que** ladite unité de calcul (16) est agencée pour générer un signal d'état de valeur de seuil lorsqu'une valeur de seuil (S0, S1, S2, S3) est atteinte et pour resupprimer ce signal d'état de valeur de seuil lorsque ladite valeur de seuil (S0, S1, S2, S3) diminuée d'une valeur d'hystérésis n'est plus atteinte.

5. Système de détection de pression selon l'une quelconque des revendications précédentes, **caractérisé par le fait qu'**un temporisateur est prévu qui est démarré lorsqu'une valeur de seuil (S2) est atteinte et qui fournit un signal d'écoulement de temps après qu'un temps préréglé dans ledit temporisateur s'est écoulé.

6. Système de détection de pression selon l'une quelconque des revendications précédentes, **caractérisé par le fait que** ladite unité de calcul (16) est agencée pour fournir un signal lorsqu'une valeur de seuil (S0, S1, S2, S3) est atteinte et/ou durant un signal d'état de valeur de seuil généré.

7. Système de détection de pression selon l'une quelconque des revendications précédentes, **caractérisé par le fait que** deux indicateurs optiques (3, 4) sont prévus, un indicateur (3) étant en particulier un écran à cristaux liquides et l'autre indicateur (4) présentant en particulier plusieurs éléments LED de couleur différente.

8. Système de détection de pression selon l'une quelconque des revendications précédentes, **caractérisé par le fait qu'**au moins une valeur de seuil (S0, S1, S2, S3), un laps de temps et/ou un autre opérande utilisé par ladite unité de calcul (16) est paramétrable.

9. Système de détection de pression selon l'une quelconque des revendications précédentes, **caractérisé par le fait que** le système de détection de pression (1) présente un dispositif de détection de pression (2) avec ledit capteur (17), ladite unité de calcul (16) et ledit indicateur (3, 4) ainsi qu'un dispositif d'indication optique de pression (9) qui peut être monté sur l'autocuiseur et indique la pression régnant à l'intérieur de l'autocuiseur, ledit dispositif de détection de pression pouvant être fixé sur le dispositif d'indication optique de pression (9) de telle manière que le capteur (17) agit de concert avec le dispositif d'indication optique de pression (9) pour la détection de la pression.

10. Système de détection de pression selon la revendication 9, **caractérisé par le fait que** ledit dispositif d'indication optique de pression (9) comprend un poussoir (10) axialement déplaçable ayant un élément (18) magnétique ou magnétisable, ledit poussoir (10) étant disposé à étanchement dans une ouverture d'un couvercle (19) de l'autocuiseur de telle manière que, lorsque la pression dans ledit autocuiseur augmente, le poussoir (10) est déplacé à l'encontre d'une force de rappel dans le sens axial, et que le dispositif de détection de pression (2) peut être fixé sur le dispositif d'indication optique de pression (9) de telle sorte que le capteur (17) est agencé, dans le sens axial, au-dessus dudit poussoir (10).

11. Système de détection de pression selon la revendication 10, **caractérisé par le fait que** ledit poussoir (10) est guidé à déplacement axial dans un anneau (11) du dispositif d'indication optique de pression (9), le poussoir (10) émergeant de l'anneau (11) du dispositif d'indication optique de pression en cas de pression élevée à l'intérieur de l'autocuiseur.

12. Système de détection de pression selon la revendication 11, **caractérisé par le fait que** ledit anneau (11) du dispositif d'indication optique de pression (9) est logé à rotation sur une plaque de base (12) fixée sur ledit couvercle (19) de l'autocuiseur et que la force de rappel du poussoir (10) peut être variée par une rotation de l'anneau (11) par rapport à ladite plaque de base (12).

13. Système de détection de pression selon la revendication 11 ou 12, **caractérisé par le fait que** le dispositif de détection de pression (2) présente deux bras d'arrêt (8) en anneau partiel qui sont adaptés en diamètre audit anneau (11) du dispositif d'indication optique de pression (9) et qui peuvent être rapportés sur ledit anneau (11).

14. Système de détection de pression selon l'une quelconque des revendications précédentes, **caractérisé par le fait que** ladite unité de calcul (16) est agencée pour pouvoir appeler un mode de calibrage dans lequel une ou plusieurs valeur(s) de seuil (S0, S1, S2, S3) peuvent être réglées.

15. Système de détection de pression selon l'une quelconque des revendications précédentes, **caractérisé par le fait que** l'on prévoit un module de communication (23) pour la communication sans fil avec une cuisinière, ladite unité de calcul (16) étant agencée pour émettre un message à la cuisinière au moyen dudit module de communication (23) lorsqu'une valeur de seuil (S0, S1, S2, S3) est atteinte.
